# EUROPEAN PATENT APPLICATION

(11) **EP 4 697 730 A1**
(43) Date of publication of application: **18.02.2026**
(21) Application number: 24807332.2
(22) Date of filing: 18.03.2024
(51) Int. Cl.: H04N 21/43, H04N 21/436, H04N 21/462, H04N 21/637, H04N 21/6405, H04N 5/06, G09G 5/12

(54) **DISPLAY SYSTEM FOR OUTPUT IMAGE SYNCHRONIZATION, AND DISPLAY METHOD USING SAME**

(30) Priority: 18.05.2023 KR 20230064427
(71) Applicant: Samsung Electronics Co., Ltd., Suwon-si, Gyeonggi-do 16677 (KR)
(72) Inventor: KANG, Youngsoo, Suwon-si Gyeonggi-do 16677 (KR); AHIRWAR, Shailendra, Suwon-si Gyeonggi-do 16677 (KR); GUPTA, Satyaprakash, Suwon-si Gyeonggi-do 16677 (KR); KIM, Inhwan, Suwon-si Gyeonggi-do 16677 (KR)
(74) Representative: Appleyard Lees IP LLP
(86) International application number: PCT/KR2024/003363
(87) International publication number: WO 2024/237451

(57) **Abstract**

A display system, according to the embodiments of the present disclosure, may comprise: a host; and at least one display device receiving an image reproduction signal from the host. The at least one display device may: recognize a sync group on the basis of the image reproduction signal; determine whether to operate as a master device or a client device in the sync group; and, on the basis of master reproduction information from the master device, synchronize the reproduction time of an output image between the at least one display device and at least one other display device.

## Description

### [Technical Field]

Various embodiments of the disclosure relate to a display system for synchronizing output video and a display method using the same.

### [Background Art]

Various electronic devices, such as smartphones, TVs, tablet PCs, portable multimedia players (PMPs), personal digital assistants (PDAs), laptop personal computers (PCs), or wearable devices have been provided. In particular, as use of an electronic device increases, a need for content sharing between electronic devices is increasing. For example, an electronic device may share content with another electronic device.

Meanwhile, when a plurality of electronic devices share content, a playback time discrepancy may occur between output videos displayed on each electronic device. For example, if the time information transmitted by a server for synchronization between electronic devices takes different amounts of time to reach each playback device, i.e., network latency varies depending on the wireless network environment of each electronic device, a playback time discrepancy may occurbetween the contents on the electronic devices.

Therefore, when a plurality of electronic devices share content, a technology capable of continuously synchronizing the playback time of an output video between the electronic devices is required.

### [Disclosure of Invention]

### [Technical Problems]

Various embodiments of the disclosure may provide a display system and a display method using the same, which determine whether a display device operates as a master device or a client device within a sync group according to a change in the configuration of the sync group, and synchronize a playback time of an output video between the master device and the client devices.

A display system according to embodiments of the disclosure may include a host, and at least one display device receiving a video playback signal from the host. The at least one display device may recognize a sync group based on the video playback signal. The at least one display device may determine whether to operate as a master device or a client device within the sync group. The at least one display device may synchronize a playback time of an output video with at least one other display device based on master playback information from the master device.

### [Solution to Problems]

In an embodiment, the at least one display device may search for the master device within the sync group based on a multicast communication protocol, and may determine to operate as the client device within the sync group in case that the master device is present within the sync group.

In an embodiment, the at least one display device may search for the master device within the sync group based on a multicast communication protocol, and may determine whether to operate as the master device or the client device by comparing priorities with at least one other display device within the sync group in case that the master device is not present within the sync group.

In an embodiment, the master device may transmit to the client device the master playback information including at least one of a playback start presentation time stamp (PTS), a current output presentation time stamp (PTS), and a buffering time per a predetermined period.

In an embodiment, the client device may synchronize the playback time of the output video with the master device by controlling at least one of a playback start time, a playback speed, and buffering based on the master playback information.

In an embodiment, in case that the master device is removed from the sync group, the at least one display device may re-determine whether to operate as the master device or the client device within the sync group.

In an embodiment, in case that the master device within a first sync group is changed to a second sync group, the master device may determine to operate as the client device within the second sync group.

In an embodiment, in case that the master device and the client device within a first sync group are simultaneously changed to a second sync group, the at least one display device may maintain the determination of whether to operate as the master device or the client device within the first sync group in the second sync group.

In an embodiment, in case that the master device and the client device within the sync group are pre-determined according to user settings, the at least one display device may determine to operate as the pre-determined device among the master device and the client device without searching for the master device within the sync group based on a multicast communication protocol.

In an embodiment, the sync group may include at least one of a channel sharing group, a split screen playback group, a content sharing group, and an application sharing group.

A display method according to embodiments of the disclosure may include receiving, by at least one display device, a video playback signal from a host, recognizing, by the at least one display device, a sync group based on the video playback signal, determining, by the at least one display device, whether to operate as a master device or a client device within the sync group, and synchronizing, by the at least one display device, a playback time of an output video with at least one other display device based on master playback information from the master device.

In an embodiment, determining, by the at least one display device, whether to operate as the master device or the client device within the sync group may include searching for the master device within the sync group based on a multicast communication protocol, and determining to operate as the client device within the sync group in case that the master device is present within the sync group.

In an embodiment, determining, by the at least one display device, whether to operate as the master device or the client device within the sync group may include searching for the master device within the sync group based on a multicast communication protocol, and determining whether to operate as the master device or the client device by comparing priorities with at least one other display device within the sync group in case that the master device is not present within the sync group.

In an embodiment, the master device may transmit to the client device the master playback information including at least one of a playback start presentation time stamp (PTS), a current output presentation time stamp (PTS), and a buffering time per a predetermined period.

In an embodiment, the client device may synchronize the playback time of the output video with the master device by controlling at least one of a playback start time, a playback speed, and buffering based on the master playback information.

In an embodiment, in case that the master device is removed from the sync group, the method may further include re-determining, by the at least one display device, whether to operate as the master device or the client device within the sync group.

In an embodiment, in case that the master device within a first sync group is changed to a second sync group, the method may further include determining, by the master device, to operate as the client device within the second sync group.

In an embodiment, in case that the master device and the client device within a first sync group are simultaneously changed to a second sync group, the method may further include maintaining, by the at least one display device, the determination of whether to operate as the master device or the client device within the first sync group in the second sync group.

In an embodiment, determining, by the at least one display device, whether to operate as the master device or the client device within the sync group may include determining, by the at least one display device, to operate as the pre-determined device among the master device and the client device without searching for the master device within the sync group based on a multicast communication protocol in case that the master device and the client device within the sync group are pre-determined according to user settings.

In an embodiment, the sync group may include at least one of a channel sharing group, a split screen playback group, a content sharing group, and an application sharing group.

### [Advantageous Effects]

According to various embodiments of the disclosure, the display system and the display method using the same of the disclosure may determine whether a display device would operate as a master device or a client device within a sync group according to a change in the configuration of the sync group.

Therefore, the display system of the disclosure and the display method using the same may seamlessly synchronize an output video between display devices even in various environments where a configuration of the sync group is changed.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 illustrates a display system according to an embodiment.
FIG. 2 illustrates a block configuration of a display device according to an embodiment.
FIG. 3 illustrates a master device search operation of a display device according to an embodiment.
FIG. 4 illustrates a master device and a client device within a sync group according to an embodiment.
FIG. 5 illustrates a playback time synchronization operation of an output video according to an embodiment.
FIG. 6 illustrates an operation of a display device when a master device is removed from a sync group according to an embodiment.
FIG. 7 illustrates an operation in which a master device and a client device are re-determined within a sync group according to an embodiment.
FIG. 8 illustrates an operation of a display device after a sync group is changed according to an embodiment.
FIG. 9 illustrates an operation of a display device when sync groups of a master device and a client device are simultaneously changed according to an embodiment.
FIG. 10 illustrates an operation of a display device when a master device and a client device are pre-determined according to a user setting according to an embodiment.
FIG. 11 illustrates types of sync groups according to an embodiment.
FIG. 12 illustrates a flowchart of a display method according to an embodiment.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

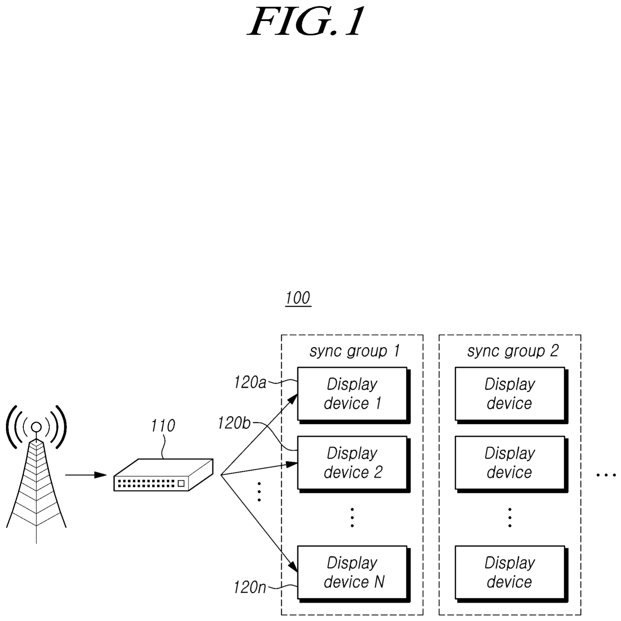

FIG. 1 illustrates a display system 100 according to an embodiment.

Referring to FIG. 1, the display system 100 may include a host 110 and at least one display devices120a, 120b, ... ,120n.The host 110 may receive an input signal from an external device.

The host 110 may generate a video playback signal based on the input signal. The host 110 may transmit the video playback signal to the at least one display devices120a, 120b, ... ,120n. Further, the host 110 may control at least one of a screen size, resolution, brightness, and contrast of a video output from the at least one display devices120a, 120b, ... ,120n. The host 110 may be compatible with various types of display devices by supporting various interfaces such as High-Definition Multimedia Interface (HDMI), DisplayPort, and Digital Visual Interface (DVI).

The display devices 120a, 120b, ... ,120n may receive the video playback signal from the host 110. The display devices 120a, 120b, ... ,120n may display an output video based on the video playback signal. For example, each of the display devices 120a, 120b, ... ,120n may display the same output video. For example, each of the display devices 120a, 120b, ... ,120n may display different output videos.

The display devices 120a, 120b, ... ,120n may be included in a predetermined sync group (e.g., Sync group 1, Sync group 2) based on the video playback signal. A sync group may be a group of the display devices 120a, 120b, ... ,120n that need to synchronize a playback time of an output video. For example, the display devices 120a, 120b, ... ,120n included in the same sync group may display the same output video. For example, the display devices 120a, 120b, ... ,120n included in the same sync group may display a single output video in a divided manner.

The display system 100 of the disclosure may determine whether the display devices120a, 120b, ... ,120n would operate as a master device or a client device within the sync group according to a change in the configuration of the sync group. Further, the display system 100 may synchronize a playback time of an output video between the master device and the client device.

For example, the display devices 120a, 120b, ... ,120n may recognize the sync group based on the video playback signal. For example, the display devices120a, 120b, ... ,120n may determine whether to operate as a master device or a client device within the sync group. For example, the display devices 120a, 120b, ... ,120n may synchronize a playback time of an output video with at least one other display device based on master playback information.

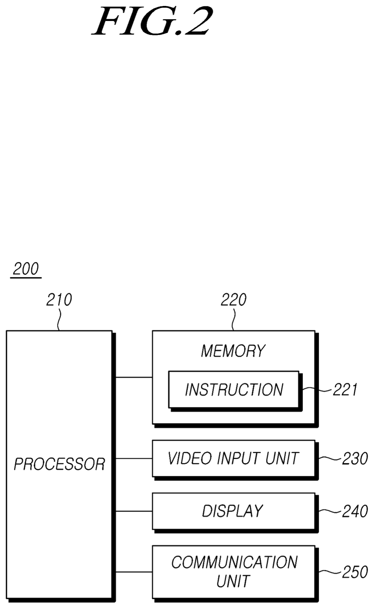

FIG. 2 illustrates a block configuration of a display device 200 according to an embodiment.

The display device 200 of FIG. 2 may be the display device (e.g., 120a, 120b, ... ,120n) of FIG. 1.

The display device 200 may be, but is not limited to, a smartphone, a tablet PC, a PC, a smart TV, a mobile phone, a personal digital assistant (PDA), a laptop computer, a media player, a micro server, a digital broadcast terminal, a navigation, a kiosk, a home appliance, or other mobile or non-mobile computing devices. Further, the display device 200 may be wearable terminals, such as watches and glasses, capable of performing various computing functions, such as video watching, and communication. The display device 200 may be various types of terminals without being limited to the above examples.

According to an example, the memory 220 is a storage medium used by the display device 200 and may store data, such as at least one instruction 221 or settings information corresponding to at least one program. The program may include an operating system (OS) program and various application programs.

In an example, the memory 220 may include at least one type of storage medium of flash memory types, hard disk types, multimedia card micro types, card types of memories (e.g., secure digital (SD) or extreme digital (XD) memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an example, the video input unit 230 may receive videos and video information through a tuner (not shown), an input/output unit (not shown), or the communication unit 250. The video input unit 230 may include at least one of the tuner and the input/output unit. The tuner may tune and select only the frequency of the broadcast channel to be received by the display device 200 among many radio wave components by amplifying, mixing, and resonating broadcast signals wiredly/wirelessly received. The broadcast signal may include video, audio, and additional data (e.g., electronic program guide (EPG)). The tuner may receive broadcast channels (or viewing videos) from various broadcast sources, such as terrestrial broadcasts, cable broadcasts, satellite broadcasts, Internet broadcasts, and the like. The tuner may be implemented integrally with the display device 200 or may be implemented as a separate tuner electrically connected to the display device 200. The input/output unit may include at least one of a high definition multimedia interface (HDMI) input port, a component input jack, a PC input port, and a USB input jack capable of receiving a video and video information from an external device of the display device 200 under the control of the processor 210. It is obvious to one of ordinary skill in the art that the input/output unit may be added, deleted, and/or changed depending on the performance and structure of the display device 200.

According to an embodiment, the display 240 may perform functions for outputting information in the form of numbers, characters, images, and/or graphics. The display 240 may include at least one hardware module for outputting. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 240 may display a screen corresponding to data received from the processor 210. The display 240 may be referred to as an 'output unit', a 'display unit', or by other terms having a technical meaning equivalent thereto.

According to an example, the communication unit 250 may provide a wired/wireless communication interface that enables communication with an external device. The communication unit 250 may include at least one of a wired Ethernet, a wireless local area network (LAN) communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 210. The short-range communication unit may perform short-range communication wirelessly with an external device under the control of the processor 210. Short-range communication may include Bluetooth, Bluetooth low energy, infrared data association (IrDA), ultra-wideband (UWB), WiFi Direct, and near-field communication (NFC). The external device may include a server device and a mobile terminal (e.g., smartphone, tablet, etc.) providing, e.g., a video service.

According to an example, the processor 210 may control at least one other component of the display device 200 and/or execute computation or data processing regarding communication by executing at least one instruction 221 stored in the memory 220. The processor 210 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

A processor 210 may recognize a sync group based on a video playback signal received from a host (e.g., the host 110 of FIG. 1). The processor 210 may determine whether the display device 200 would operate as a master device or a client device within the sync group. The processor 210 may synchronize a playback time of an output video with at least one other display device based on master playback information.

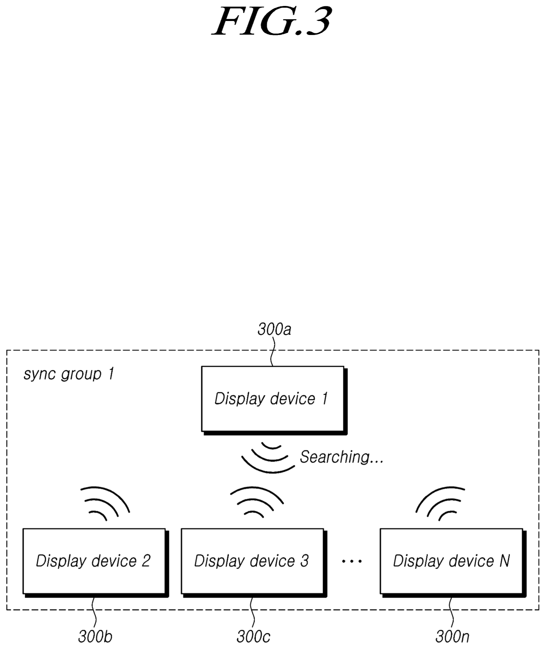

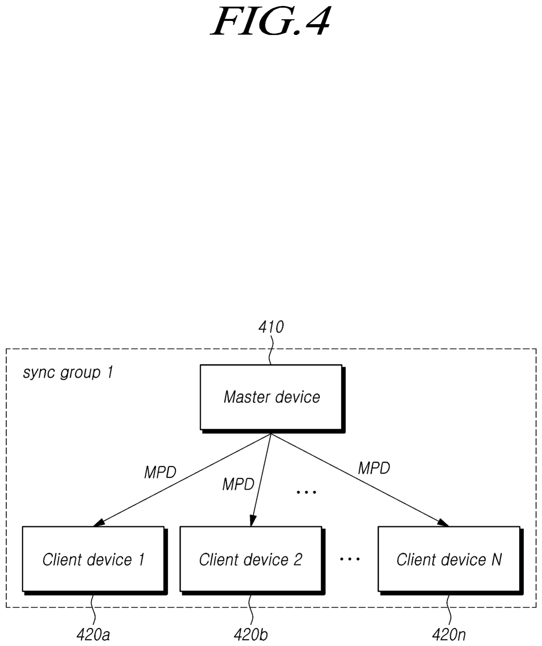

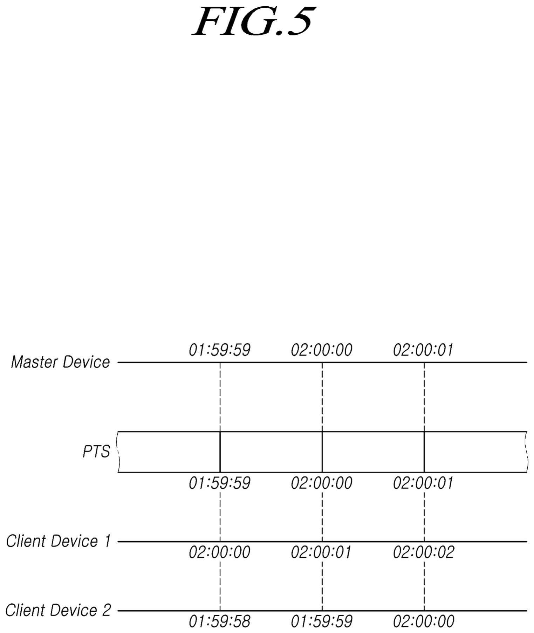

FIG. 3 illustrates a master device search operation of a display device according to an embodiment, FIG. 4 illustrates a master device and a client device within a sync group according to an embodiment, and FIG. 5 illustrates a playback time synchronization operation of an output video according to an embodiment.

Referring to FIG. 3, at least one display device 300a, 300b, 300c, ... ,300n may recognize a sync group based on a video playback signal received from a host. The at least one display device 300a, 300b, 300c, ... ,300n may determine whether to operate as a master device or a client device within the sync group.

The at least one display device 300a, 300b, 300c, ... ,300n may search for the master device within the sync group based on a multicast communication protocol.

In an embodiment, in a case that the master device is present within the sync group, the at least one display device 300a, 300b, 300c, ... ,300n may determine to operate as the client device within the sync group.

In an embodiment, in a case that the master device is not present within the sync group, the at least one display device 300a, 300b, 300c, ... ,300n may compare a priority with at least one other display device within the sync group. For example, in a case that a priority is higher than the at least one other display device, the at least one display device 300a, 300b, 300c, ... ,300n may determine to operate as the master device. For example, in a case that a priority is lower than the at least one other display device, the at least one display device 300a, 300b, 300c, ... ,300n may determine to operate as a client device. In an embodiment, the at least one display device 300a, 300b, 300c, ... ,300n may determine a priority between the at least one display device 300a, 300b, 300c, ... , 300n based on a multicast address, but it is understood by those skilled in the art that the priority determination criterion is not limited thereto.

Referring to FIGS. 4 and 5, the at least one display device 410, 420a, 420b, ... ,420n within the sync group may synchronize a playback time of an output video with at least one other display device based on master playback information. For example, the at least one display device 410 may be a master device. For example, the at least one display device 420a, 420b, ... ,420n may be a client device.

The master device 410 may transmit master playback information (MPD) to the client device 420a, 420b, ... ,420n based on the multicast communication protocol. For example, the master device 410 may perform data communication with the client device 420a, 420b, ... ,420n using at least one of a user datagram protocol (UDP) protocol or an internet group management protocol (IGMP) protocol.

For example, the master device 410 may per a certain period transmit to the client device 420a, 420b, ... ,420n the master playback information (MPD) including at least one of a playback start presentation time stamp (PTS), a current output presentation time stamp (PTS), and a buffering time. The master device 410 may synchronize output video playback between the at least one display device 410, 420a, 420b, ... ,420n within the sync group based on the master playback information (MPD).

The playback start PTS is a value indicating a time at which playback of an output video starts, and may be used to synchronize a time at which playback of the output video starts. For example, the master device 410 may transmit the playback start PTS to the client device 420a, 420b, ... ,420n so that each client device 420a, 420b, ... ,420n starts playback of the output video at the same time.

The current output PTS represents a PTS value of an output video currently displayed on the client device 420a, 420b, ... ,420n, through which the master device 410 may grasp a state of the output video of the client device 420a, 420b, ... ,420n. For example, the master device 410 may collect the current output PTS of the client device 420a, 420b, ... ,420n and synchronize a state of the output video of each client device 420a, 420b, ... ,420n.

The buffering time may be a value indicating a time required for the master device 410 to buffer an output video before the output video is transmitted to the client device 420a, 420b, ... ,420n. For example, the buffering time may be set differently according to a network circumstance. For example, the master device 410 may calculate the buffering time based on a network bandwidth and a processing speed of the master device 410. For example, the client device 420a, 420b, ...420n may perform buffering based on the buffering time.

The client device 420a, 420b, ... ,420n may synchronize a playback time of the output video with the master device 410 by controlling at least one of a playback start time, a playback speed, or buffering based on the master playback information (MPD).

Specifically, the client device 420a, 420b, ... ,420n may start playback of an output video based on the playback start PTS. The client device 420a, 420b, ... ,420n may identify a PTS value of an output video currently being output and compare it with a current output PTS value received from the master device. The client device 420a, 420b, ... ,420n may adjust a playback speed in case where the PTS value of the output video currently being output differs from the current output PTS value received from the master device. For example, as illustrated in FIG. 5, a clock difference of a first client device (Client Device 1) is 0.01 seconds based on the current output PTS value (e.g., PTS of FIG. 5) included in the master playback information (MPD), therefore, the first client device (Client Device 1) may synchronize a playback time of an output video with a master device (Master Device) by lowering a playback speed. Similarly, as illustrated in FIG. 5, a clock difference of a second client device (Client Device 2) is -0.01 seconds based on the current output PTS value (e.g., PTS of FIG. 5) included in the master playback information (MPD), therefore, the second client device (Client Device 2) may synchronize a playback time of an output video with the master device (Master Device) by increasing a playback speed. The client device 420a, 420b, ... ,420n may quickly or slowly receive video playback information from a host (e.g., the host 110 of FIG. 1) by performing buffering based on a buffering time received from the master device.

As such, the display system 100 of the disclosure may determine whether a display device would operate as a master device or a client device within a sync group based on recognizing the sync group. Therefore, the display system 100 of the disclosure may synchronize an output video between display devices without adding a separate component for synchronization.

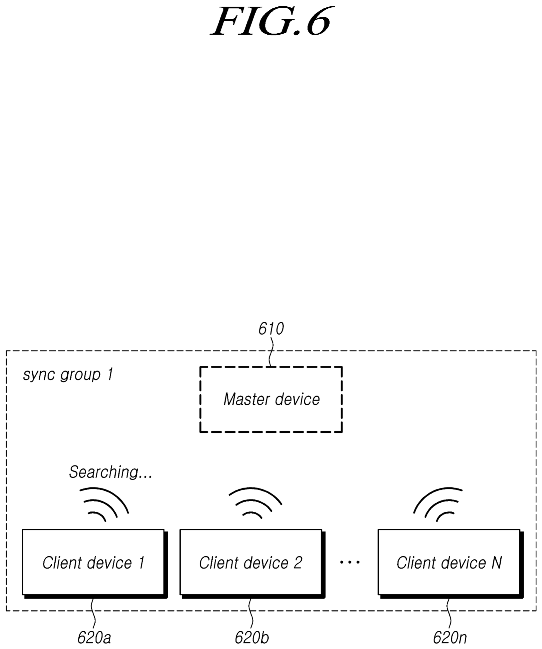

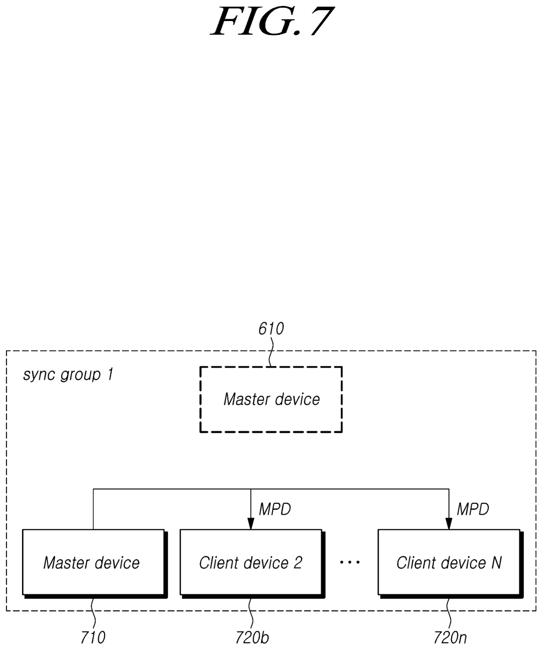

FIG. 6 illustrates an operation of a display device when a master device is removed from a sync group according to an embodiment, and FIG. 7 illustrates an operation in which a master device and a client device are re-determined within a sync group according to an embodiment.

Referring to FIGS. 6 and 7, the display system 100 of the disclosure may re-determine a master device and a client device within the sync group according to a change in the configuration of the sync group.

In a case that the master device 610 is removed from the sync group, the at least one display device 620a, 620b, ... ,620n may re-determine whether to operate as the master device or the client device within the sync group.

As illustrated in FIG. 6, in a case that the master device 610 is removed from the sync group, the at least one display device 620a, 620b, ... ,620n that operated as a client device in the sync group may search for a new master device within the sync group, based on the multicast communication protocol. For example, in a case that a new master device is not present within the sync group, the at least one display device 620a, 620b, ... ,620n may compare a priority with at least one other display device within the sync group.

As illustrated in FIG. 7, a display device (e.g., 620a of FIG. 6) with the highest priority among the at least one display device (e.g., 620a, 620b, ... ,620n of FIG. 6) may determine to operate as the master device 710. At least one display device (e.g., 620b, ... ,620n of FIG. 6) with a priority that is not the highest among the at least one display device (e.g., 620a, 620b, ... ,620n of FIG. 6) may determine to operate as the client device 720b, ... ,720n.

The new master device 710 may transmit master playback information (MPD) to the client device 720b, ... ,720n based on the multicast communication protocol. For example, the master device 710 may per a predetermined period transmit to the client device 720b, ... ,720n the master playback information (MPD) including at least one of a playback start PTS, a current output PTS, and a buffering time. The master device 710 may synchronize output video playback between the at least one display device 710, 720b, ... ,720n within the sync group based on the master playback information (MPD).

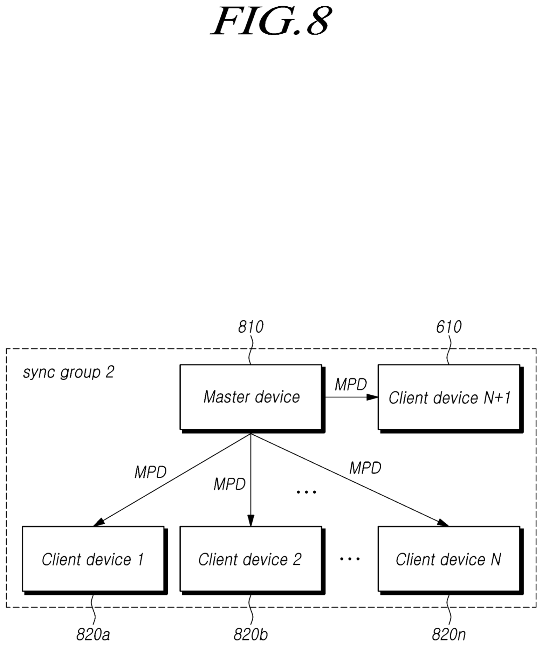

FIG. 8 illustrates an operation of a display device after a sync group is changed according to an embodiment.

Referring to FIGS. 6 to 8, in a case that a sync group of a master device (e.g., 610 of FIG. 6) is changed, the master device may operate as a client device in the changed sync group.

For example, as illustrated in FIG. 8, in a case that the master device (e.g., 610 of FIG. 6) within a first sync group (sync group 1) is changed to a second sync group (sync group 2), the master device (e.g., 610 of FIG. 6) may determine to operate as a client device 610 within the second sync group (sync group 2).

In this case, the client device 610 changed to the second sync group (sync group 2) may synchronize a playback time of the output video with the master device 810 by controlling at least one of a playback start time, a playback speed, and buffering based on master playback information (MPD), similar to the other client device 820a, 820b, ... ,820n within the second sync group (sync group 2).

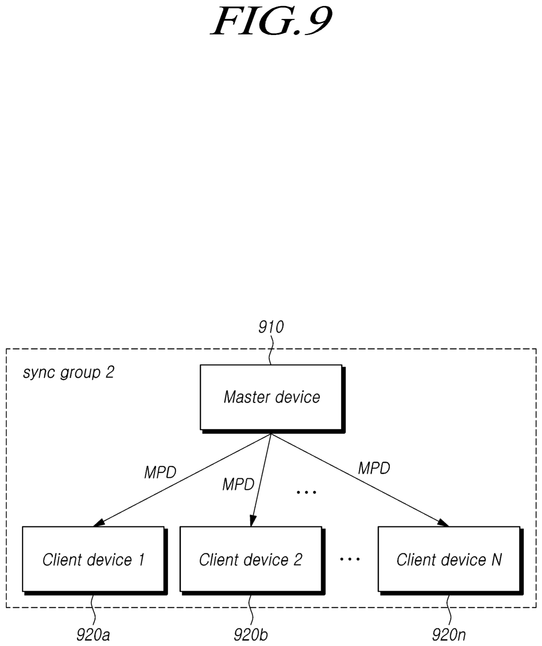

FIG. 9 illustrates an operation of a display device when sync groups of a master device and a client device are simultaneously changed according to an embodiment.

Referring to FIGS. 4 and 9, in a case that all display devices within a sync group are simultaneously changed to another sync group, a master device and a client device within the sync group may be maintained even in the changed other sync group.

Specifically, in a case that the master device 410 and the client device 420a, 420b, ... , 420n within a first sync group (e.g., sync group 1 of FIG. 4) are simultaneously changed to a second sync group (e.g., sync group 2 of FIG. 9), the at least one display device 910, 920a, 920b, ... , 920n may maintain the determination of whether to operate as the master device or the client device within the first sync group (e.g., sync group 1 of FIG. 4) in the second sync group.

In this case, in the second sync group (e.g., sync group 2 of FIG. 9), the at least one display device 910, 920a, 920b, ... ,920n may not separately perform an operation of searching for a master device. Further, in the second sync group (e.g., sync group 2 of FIG. 9), the at least one display device 910, 920a, 920b, ... ,920n may operate as the master device or the client device, respectively, in the same manner as in the sync group before change (e.g., the first sync group).

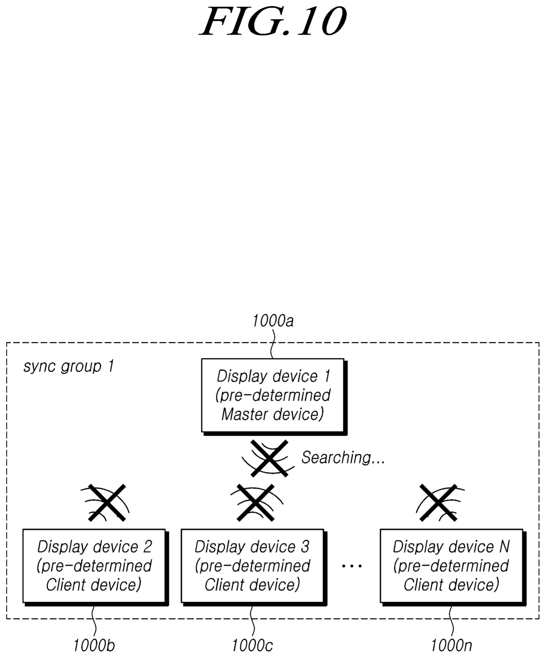

FIG. 10 illustrates an operation of a display device when a master device and a client device are pre-determined according to a user setting according to an embodiment.

Referring to FIG. 10, the at least one display device 1000a, 1000b, 1000c, ... ,1000n within the sync group may be designated as at least one of a master device and a client device according to user settings.

For example, in a case that the master device and the client device within the sync group are pre-determined according to user settings, the at least one display device may determine to operate as a pre-determined device (e.g., 1000a as a master device, 1000b, 1000c, ... , as are client devices) among the master device and the client device 1000b, 1000c, ... , 1000n without performing an operation of searching for the master device within the sync group based on the multicast communication protocol.

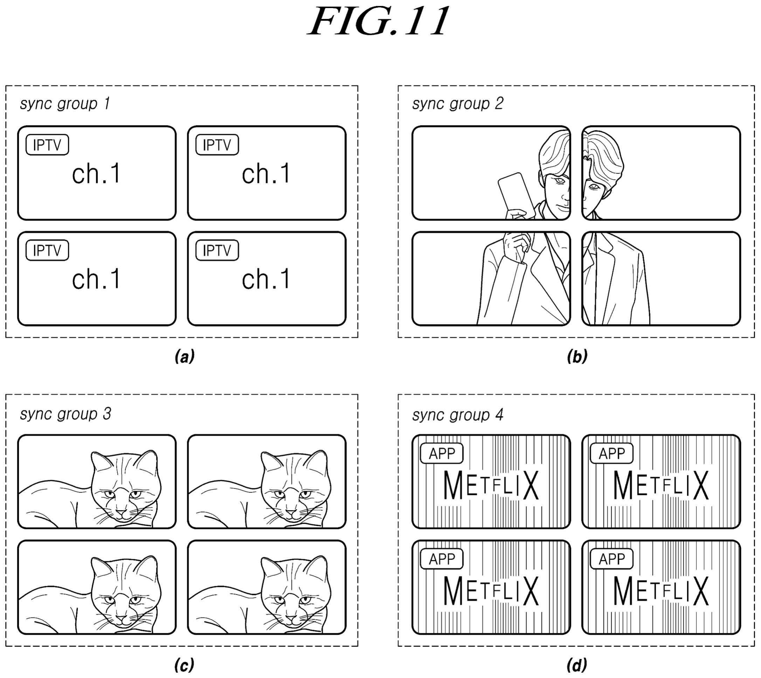

FIG. 11 illustrates types of sync groups according to an embodiment.

Referring to FIG. 11, a sync group may be a unit group that synchronizes a playback time of an output video of at least one display device. For example, a display device included in the same sync group may display the same output video. For example, a display device included in the same sync group may display a single output video in a divided manner.

According to an example, the sync group may include at least one of a channel sharing group (sync group 1), a split screen playback group (sync group 2), a content sharing group (sync group 3), and an application sharing group (sync group 4).

As illustrated in (a) of FIG. 11, the channel sharing group (sync group 1) may be a sync group in which at least one display device shares the same channel. For example, the at least one display device within the channel sharing group (sync group 1) may play the same channel at the same time. For example, the channel sharing group (sync group 1) may be used in at least one of TV and Internet protocol television (IPTV).

As illustrated in (b) of FIG. 11, the split screen playback group (sync group 2) may be a sync group in which at least one display device plays a single output video through a split screen. For example, four display devices within the split screen playback group (sync group 2) may play a single output video divided into four segments.

As illustrated in (c) of FIG. 11, the content sharing group (sync group 3) may be a sync group in which at least one display device shares and plays the same content. For example, the at least one display device within the content sharing group (sync group 3) may stream identical content (e.g., a video) being played on an external device (e.g., a smartphone).

As illustrated in (d) of FIG. 11, the application sharing group (sync group 4) may be a sync group in which at least one display device shares and uses the same application. For example, the at least one display device within the application sharing group (sync group 4) may execute an identical application being used on at least one other display device.

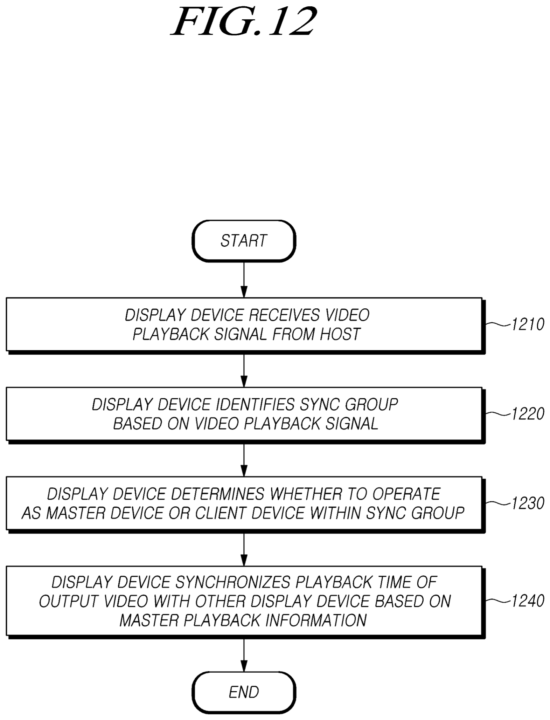

FIG. 12 illustrates a flowchart of a display method according to an embodiment.

Referring to FIG. 12, the display method may include an operation 1210 in which at least one display device receives a video playback signal from a host, an operation 1220 in which the at least one display device recognizes a sync group based on the video playback signal, an operation 1230 in which the at least one display device determines whether to operate as a master device or a client device within the sync group, and an operation 1240 in which the at least one display device synchronizes a playback time of an output video with at least one other display device based on master playback information.

According to an example, in operation 1210, a host may transmit a video playback signal to at least one display device. For example, the at least one display device may display an output video based on the video playback signal received from the host.

According to an example, in operation 1220, a display device may recognize a sync group based on a video playback signal. For example, the display device may recognize a sync group that plays the same output video according to the video playback signal. For example, the display device may recognize a sync group that plays a single output video in a divided manner according to the video playback signal.

According to an example, in operation 1230, a display device may determine whether to operate as a master device or a client device within a sync group. For example, the at least one display device may search for the master device within the sync group based on the multicast communication protocol.

In an embodiment, in a case that the master device is present within the sync group, the at least one display device may determine to operate as the client device within the sync group.

In an embodiment, in a case that the master device is not present within the sync group, the at least one display device may compare a priority with at least one other display device within the sync group. For example, in a case that a priority is higher than the at least one other display device, the at least one display device may determine to operate as the master device. For example, in a case that a priority is lower than the at least one other display device, the at least one display device may determine to operate as a client device.

According to an example, in operation 1240, a display device may synchronize a playback time of an output video with at least one other display device based on master playback information. For example, a master device may per a predetermined period transmit to the client device master playback information (MPD) including at least one of a playback start PTS, a current output PTS, and a buffering time. For example, the client device may synchronize a playback time of an output video with the master device by controlling at least one of the playback start time, the playback speed, and the buffering based on the master playback information (MPD).

In an embodiment, the display method of the disclosure may re-determine a master device and a client device within a sync group according to a change in the configuration of the sync group. For example, in a case that the master device is removed from a sync group, at least one display device may re-determine whether to operate as the master device or the client device within the sync group. For example, in a case that a sync group of a master device is changed, the master device may operate as a client device in the changed sync group. For example, in a case that all display devices within a sync group are simultaneously changed to another sync group, a master device and a client device within the sync group may be maintained even in the changed other sync group. For example, in a case that the master device and the client device within the sync group are pre-determined according to user settings, the at least one display device may determine to operate as a predetermined device among the master device and the client device without searching for the master device within the sync group based on the multicast communication protocol.

As such, the display method of the disclosure may determine whether a display device operates as a master device or a client device within a sync group according to a change in the configuration of the sync group.

Therefore, the display method of the disclosure may seamlessly synchronize an output video between display devices even in various environments where a configuration of the sync group is changed.

However, since this has been described above, no duplicate description is given.

The display device according to various embodiments of the disclosure may be one of various types of electronic devices. The display devices may include, for example, a portable communication device (e.g., a smartphone), a computer device, a portable multimedia device, a portable medical device, a camera, a wearable device, or a home appliance. The display devices according to an embodiment of the disclosure are not limited to the above-described devices.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry".A part or module may be a single integral component, or a minimum unit or part thereof, adapted to perform one or more functions.For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components.According to various embodiments, one or more of the above-described components may be omitted, or one or more other components may be added. Alternatively or additionally, a plurality of components (e.g., modules or programs) may be integrated into a single component.In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display system (100), comprising:
a host (110); and
at least one display device (200) receiving a video playback signal from the host, wherein the at least one display device:
recognizes a sync group based on the video playback signal;
determines whether to operate as a master device or a client device within the sync group; and
synchronizes a playback time of an output video with at least one other display device based on master playback information from the master device.

2. The display system of claim 1, wherein the at least one display device:
searches for the master device within the sync group based on a multicast communication protocol; and
determines to operate as the client device within the sync group in case that the master device is present within the sync group.

3. The display system of claim 1, wherein the at least one display device:
searches for the master device within the sync group based on a multicast communication protocol; and
determines whether to operate as the master device or the client device by comparing priorities with at least one other display device within the sync group in a case that the master device is not present within the sync group.

4. The display system of any one of claims 1 to 3, wherein the master device transmits to the client device the master playback information including at least one of a playback start presentation time stamp (PTS), a current output presentation time stamp (PTS), and a buffering time per a predetermined period.

5. The display system of any one of claims 1 to 3, wherein the client device synchronizes the playback time of the output video with the master device by controlling at least one of a playback start time, a playback speed, and buffering based on the master playback information.

6. The display system of any one of claims 1 to 5, wherein in case that the master device is removed from the sync group, the at least one display device re-determines whether to operate as the master device or the client device within the sync group.

7. The display system of any one of claims 1 to 5, wherein in a case that the master device within a first sync group is changed to a second sync group, the master device determines to operate as the client device within the second sync group.

8. The display system of any one of claims 1 to 5, wherein in a case that the master device and the client device within a first sync group are simultaneously changed to a second sync group, the at least one display device maintains the determination of whether to operate as the master device or the client device within the first sync group in the second sync group.

9. The display system of any one of claims 1 to 5, wherein in a case that the master device and the client device within the sync group are pre-determined according to user settings, the at least one display device determines to operate as the pre-determined device among the master device and the client device without searching for the master device within the sync group based on a multicast communication protocol.

10. The display system of any one of claims 1 to 5, wherein the sync group includes at least one of a channel sharing group, a split screen playback group, a content sharing group, and an application sharing group.

11. A display method, comprising:
receiving (1210), by at least one display device, a video playback signal from a host;
recognizing (1220), by the at least one display device, a sync group based on the video playback signal;
determining (1230), by the at least one display device, whether to operate as a master device or a client device within the sync group; and
synchronizing (1240), by the at least one display device, a playback time of an output video with at least one other display device based on master playback information from the master device.

12. The display method of claim 11, wherein the determining, by the at least one display device, whether to operate as the master device or the client device within the sync group comprises:
searching for the master device within the sync group based on a multicast communication protocol; and
determining to operate as the client device within the sync group in a case that the master device is present within the sync group.

13. The display method of claim 11, wherein the determining, by the at least one display device, whether to operate as the master device or the client device within the sync group comprises:
searching for the master device within the sync group based on a multicast communication protocol; and
determining whether to operate as the master device or the client device by comparing priorities with the at least one other display device within the sync group in a case that the master device is not present within the sync group.

14. The display method of any one of claims 11 to 13, wherein the master device transmits to the client device the master playback information including at least one of a playback start presentation time stamp (PTS), a current output presentation time stamp (PTS), and a buffering time per a predetermined period.

15. The display method of any one of claims 11 to 13, wherein the client device synchronizes the playback time of the output video with the master device by controlling at least one of a playback start time, a playback speed, and buffering based on the master playback information.
